# EUROPÄISCHE PATENTSCHRIFT

(11) **EP 3 571 464 B1**
(45) Veröffentlichungstag und Bekanntmachung des Hinweises auf die Patenterteilung: **30.12.2020**
(21) Anmeldenummer: 18704917.6
(22) Anmeldetag: 01.02.2018
(51) Int. Cl.: G01B 11/25, G01B 21/04, G06T 7/80

(54) **VORRICHTUNG UND VERFAHREN ZUR KALIBRIERUNG EINES MESSGERÄTES MITTELS PROJIZIERTER MUSTER MIT VIRTUELLER EBENE**
DEVICE AND METHOD FOR CALIBRATING A MEASURING APPARATUS BY MEANS OF PROJECTED PATTERNS USING A VIRTUAL PLANE
DISPOSITIF ET PROCÉDÉ D'ÉTALONNAGE D'UN APPAREIL DE MESURE AU MOYEN D'UN MOTIF PROJETÉ COMPORTANT UN PLAN VIRTUEL

(30) Priorität: 20.02.2017 DE 102017202651
(43) Veröffentlichungstag der Anmeldung: 27.11.2019
(73) Patentinhaber: Siemens Aktiengesellschaft, 80333 München (DE)
(72) Erfinder: ENGEL, Thomas, 73432 Aalen (DE); WISSMANN, Patrick, 81677 München (DE)
(86) Internationale Anmeldenummer: PCT/EP2018/052562
(87) Internationale Veröffentlichungsnummer: WO 2018/149656

(56) Entgegenhaltungen:
- EP-A2- 1 329 760
- DE-A1- 4 130 237
- US-A- 5 557 410
- US-A- 5 636 025
- US-A1- 2004 105 100
- US-A1- 2014 368 832
- US-A1- 2015 350 617
- US-A1- 2015 350 618
- TAKAYUKI OKATANI ET AL: "Autocalibration of a projector-camera system", IEEE TRANSACTIONS ON PATTERN ANALYSIS AND MACHINE INTELLIGENCE, IEEE COMPUTER SOCIETY, USA, Bd. 27, Nr. 12, 1. Dezember 2005 (2005-12-01), Seiten 1845-1855, XP001512619, ISSN: 0162-8828, DOI: 10.1109/TPAMI.2005.235

## Beschreibung

Bei großen Bauteilen werden günstigerweise Messsysteme eingesetzt, die einen großen Erfassungsbereich haben. So beispielsweise bei einem sogenannten "Lavona Scanner" der einen Erfassungsbereich von 2 ^{∗} 2,5 m² hat. Damit die notwendige Kalibrierung schnell erfolgen kann, ist es günstig ein Kalibriertarget zu haben, das möglichst die Größe des gesamten Messbereichs hat. Da für eine Vernetzung der Messungen in unterschiedlichen Tiefen des Messbereichs ebenso mit schräggestellten Target gemessen wird, sollte das Target idealerweise im Faktor 1/Cos(des Kippwinkels gegen die Normale) größer sein. In dem Beispiel wären es dann ca. 2,5 ^{∗} 3 m².

Derartig große Kalibriertargets sind schwer herzustellen, insbesondere mit der passenden Genauigkeit und damit sehr teuer. Ferner sind diese allein in Folge deren Größe schon in deren Handhabung schwierig. Da sie für eine geforderte Stabilität und Maßtreue im Bereich von 10 µm recht stabil ausgeführt sein müssen, sind diese ebenso entsprechend schwer.

Herkömmlicherweise wird das Problem dadurch gelöst, dass man kleinere Targets verwendet und diese im Messbereich so verschiebt, dass diese für eine Ebene dann beispielsweise an neun Positionen gebracht werden müssen. Dies ist sehr zeit- und arbeitsaufwendig und folglich dauert eine Kalibrierung recht lange. In der Kalibrierdauer können sich dann ebenso beispielsweise die Umweltbedingungen stark ändern, was dann die mit der Kalibrierung erzielbare Genauigkeit deutlich beeinträchtigen kann. Beispiele hierfür wären eine geänderte Sonneneinstrahlung in den Messbereich, was sowohl die Temperatur als auch die Kontrastverhältnisse bei der Aufnahme der Kalibrierbilder beeinflussen kann.
Wenn man also in fünf Ebenen mit drei Kippwinkeln pro Ebene messen möchte, ergeben sich 15 Messungen. Wenn man lediglich neun Messungen pro Ebene benötigt, werden dann bereits 9 ^{∗} 15 = 135 Messungen erforderlich.

Bei der Kalibrierung braucht es ebenso eine Maßverkörperung für die Kamera, da die optische Erfassung mit der Kamera lediglich die Winkelgröße des Objektes erfasst. Es braucht dann mindestens eine Maßverkörperung, um aus Winkelgröße und Abstand dann ebenso laterale Dimensionen messen zu können. Kalibrierplatten werden meist selber ebenso kalibriert, sodass die einzelnen Strukturen auf der Kalibrierplatte in Größe und/oder Lage bekannt sind.

Der Artikel "Autocalibration of a Projector-Camera system" von Takayuki Okatani et al., IEEE transactions on pattern analysis and machine intelligence, VOL. 27, NO: 12, Dezember 2005, offenbart ein Projektorkamerasystem, welches Projektoren und Kameras umfasst. Dabei projizieren die Projektoren Bilder auf eine ebene Oberfläche, während die Kameras die Bilder aufnehmen.

Die US 5 557 410 A offenbart ein Verfahren zum Kalibrieren eines dreidimensionalen optischen Messsystems.

Der US 2015/350618 A1 ist ein Verfahren zum Projizieren von digitalen Informationen auf ein echtes Objekt in einer echten Umgebung als bekannt zu entnehmen.

Die US 5 636 025 A offenbart ein System zum Messen eines Versatzes von Punkten auf einer konturierten Oberfläche relativ zu einer bekannten Ebene.

Des Weiteren ist aus der US 2004/105100 A1 ein Gerät bekannt, um Ränder auf eine Oberfläche zu projizieren.

Es ist Aufgabe bei einer Vermessung eines großen Bauteils mittels Messsystemen mit einem entsprechend großen Erfassungsbereich, eine Kalibrierung einfach auszuführen. Es sollen aufwändige Kalibriertargets, wie es beispielsweise Kalibriertafeln und Kalibriermarken sind, vermieden werden. Ein Maßstab oder Maßverkörperungen sollen vereinfacht bereitgestellt werden.

Kalibrierung (in Anlehnung an das englische Wort "calibration" auch Kalibration) in der Messtechnik ist ein Messprozess zur zuverlässig reproduzierbaren Feststellung und Dokumentation der Abweichung eines Messgerätes oder einer Maßverkörperung gegenüber einem anderen Gerät oder einer anderen Maßverkörperung, die in diesem Fall als Normal bezeichnet werden. In einer weiteren Definition kann zur Kalibrierung ein zweiter Schritt gehören, nämlich die Berücksichtigung der ermittelten Abweichung bei der anschließenden Benutzung des Messgerätes zur Korrektur der abgelesenen Werte.

Die Aufgabe wird durch eine Vorrichtung gemäß dem Hauptanspruch und einem Verfahren gemäß dem Nebenanspruch gelöst.

Gemäß einem ersten Aspekt wird eine Vorrichtung zur Kalibrierung eines Messgerätes zur Vermessung eines Messobjektes, das sich insbesondere entlang eines Bereiches in Metern im Raum erstreckt, vorgeschlagen, mit einem das Messobjekt erfassenden Erfassungsbereich, wobei mittels eines Lichtprojektors verschiedene Kalibriermuster in den Erfassungsbereich des Messgerätes auf eine reale ebene Wand oder reale ebene Fläche projiziert werden. Mittels einer Rechnereinrichtung wird die reale ebene Wand oder reale ebene Fläche mathematisch als ideal ebene Wand oder ideal ebene Fläche berechnet und diese für die Kalibrierung verwendet.

Gemäß einem zweiten Aspekt wird ein Verfahren zur Kalibrierung eines Messgerätes zur Vermessung eines Messobjektes, das sich insbesondere entlang eines Bereiches in Metern im Raum erstreckt, mit einem das gesamte Messobjekt erfassenden Erfassungsbereich, wobei mittels eines Lichtprojektors verschiedene Kalibriermuster in den Erfassungsbereich des Messgerätes auf eine reale ebene Wand oder reale ebene Fläche projiziert werden. Mittels einer Rechnereinrichtung wird die reale ebene Wand oder reale ebene Fläche mathematisch als ideal ebene Wand oder ideal ebene Fläche berechnet und diese für die Kalibrierung verwendet.

Erfindungsgemäß wird vorgeschlagen, kein fixes bzw. starres Kalibriertarget zu verwenden, sondern die Kalibriermarken auf eine Wand zu projizieren, die möglichst eben ist bzw. möglichst frei von Störungen, wie es beispielsweise Türen oder Durchgänge oder Fugen oder Nähte sein können.

Es wird ein optischer Projektor vorgeschlagen, der die Marken auf eine möglichst ebene Fläche projiziert, wobei vorausgesetzt wird, dass diese Fläche nicht die Ebenheitsanforderungen der bisher benutzten Kalibriertargets erfüllt, sondern eher bautypisch im Bereich von einigen mm bis cm liegen dürfte. Die zur Kalibrierung genutzte Fläche kann also in guter bis sehr guter Näherung als eben angesehen werden.

Die aus der Ebenheitsabweichung entstehenden Fehler in der Massverkörperung und damit für die Kalibrierung sind in der Messtechnik sogenannte Kosinus-Fehler oder Fehler zweiter Ordnung, Stufen in der Oberfläche machen da mehr Störungen, die je nach Lage zur Kamera zu Fehlern zweiter Ordnung und in besonderen Fällen ebenso zu Fehlern erster Ordnung führen können.

Zum Kalibrieren ist es wichtig, dass der Messaufbau unterschiedliche Kalibriermuster aufnimmt. Das kann erreicht werden, wenn der Kalibrierprojektor und/oder Messaufbau relativ zu der Wand verfahren werden kann. Es erfolgt eine Projektion eines Kalibriermusters auf eine näherungsweise ebene Fläche.

Mittels der virtuellen Ebene kann das Verfahren vereinfacht und die Kalibrierung wirksamer werden.

Mittels eines Polarisators oder eines Strahlenteilers werden zwei mit einem einem Maßverkörperung bereitstellenden Strahlversatz zueinander lateral räumlich verschobene Kalibriermuster erzeugt.

Der Strahl kann aufgrund der Polarisation aufgespalten werden und die aufgespaltenen Teile können gegeneinander räumlich versetzt werden. Technisch entspricht das der Erzeugung von neuen Lichtquellen, die aufgrund der unterschiedlichen Polarisation zueinander inkohärent sind.

Die Muster können frei in den Raum propagieren oder über eine Optik in den zu vermessenden Bereich bzw. auf die Wand abgebildet werden.

Die Projektion der Kalibriermarken bzw. Muster kann mit kohärenten oder inkohärenten Lichtquellen erfolgen.

Um ein Maßstab für die Kalibrierung der lateralen Dimensionen zu bekommen, kann ein Maßstab auf die Wandebene markiert werden oder vor der Wand aufgestellt werden. Das optische Muster aus dem Musterprojektor wird in einem Strahlteiler geteilt und dann mit einer lateralen Verschiebung quasi doppelt projiziert. So kann jedes Element des Musters ein entsprechendes Element des verschobenen Musters haben. Über die gesamte Wand, auf die das Kalibriermuster projiziert wird, gibt es dann diesen Abstand zur Kalibrierung der lateralen Dimensionen. Durch die rein laterale Verschiebung bleibt der Abstand über die gesamte Projektionstiefe erhalten. Damit transportiert die Verdoppelung des Musters über diesen Basisabstand eine laterale Dimension.

Weitere vorteilhafte Ausgestaltungen werden in den Unteransprüchen beansprucht.

Gemäß einer vorteilhaften Ausgestaltung kann mittels einer Rechnereinrichtung und einer Vielzahl von Aufnahmen des Messgerätes die Güte der realen ebenen Wand oder der realen ebenen Fläche mathematisch berechnet und deren Einfluss mathematisch korrigiert werden. Aus der Überbestimmung bei Bildaufnahme mit mehr Aufnahmen, als unbedingt erforderlich, kann die Güte der näherungsweise ebenen Fläche bei der Kalibrierung mitbestimmt werden und deren Einfluss rechnerisch korrigiert werden.

Gemäß einer weiteren vorteilhaften Ausgestaltung können mittels einer Rechnereinrichtung Kalibrierparameter in einem Schritt oder getrennt in trinsische und externe Kalibrierparameter in zwei Schritten bestimmt werden.

Gemäß einer weiteren vorteilhaften Ausgestaltung können mittels eines Polarisators oder eines Strahlenteilers zwei mit einem einem Maßverkörperung bereitstellenden Strahlversatz zueinander lateral räumlich verschobene Kalibriermuster erzeugt werden.

Der Strahl kann aufgrund der Polarisation aufgespalten werden und die aufgespaltenen Teile können gegeneinander räumlich versetzt werden. Technisch entspricht das der Erzeugung von neuen Lichtquellen, die aufgrund der unterschiedlichen Polarisation zueinander inkohärent sind.

Die Muster können frei in den Raum propagieren oder über eine Optik in den zu vermessenden Bereich bzw. auf die Wand abgebildet werden.

Die Projektion der Kalibriermarken bzw. Muster kann mit kohärenten oder inkohärenten Lichtquellen erfolgen.

Um ein Maßstab für die Kalibrierung der lateralen Dimensionen zu bekommen, kann ein Maßstab auf die Wandebene markiert werden oder vor der Wand aufgestellt werden. Gemäß der vorteilhaften Ausgestaltung wird das optische Muster aus dem Musterprojektor in einem Strahlteiler geteilt und dann mit einer lateralen Verschiebung quasi doppelt projiziert. So kann jedes Element des Musters ein entsprechendes Element des verschobenen Musters haben. Über die gesamte Wand, auf die das Kalibriermuster projiziert wird, gibt es dann diesen Abstand zur Kalibrierung der lateralen Dimensionen. Durch die rein laterale Verschiebung bleibt der Abstand über die gesamte Projektionstiefe erhalten. Damit transportiert die Verdoppelung des Musters über diesen Basisabstand eine laterale Dimension.

Gemäß einer weiteren vorteilhaften Ausgestaltung kann der Lichtprojektor eine Lichtquelle, insbesondere einen Laser, eine Kollimationsoptik und ein Mustergenerator, der insbesondere als eine Musterplatte ausgeführt ist, aufweisen.

Gemäß einer weiteren vorteilhaften Ausgestaltung kann die Musterplatte als eine Transmissionsstruktur, als refraktive, diffraktive oder reflektierende Struktur oder als ein Computer generiertes Hologramm ausgebildet sein. Die Musterplatte kann als Dia, also als Transmissionsstruktur mit binärem Muster oder Muster mit unterschiedlichen Helligkeitsstufen ausgeführt sein. Alternativ kann das Muster als refraktive oder diffraktive Struktur, als diffraktives optisches Element oder als Computer generiertes Hologramm ausgeführt sein. Alternativ kann die Musterplatte ebenso reflektierend ausgeführt sein, beispielsweise als strukturierter Spiegel, als verspiegeltes diffraktives optisches Element oder als Computer generiertes Hologramm.

Gemäß einer weiteren vorteilhaften Ausgestaltung kann der Lichtprojektor eine kohärente oder teilkohärente Lichtquelle aufweisen, wobei zwischen Mustergenerator und einer im Strahlengang nach der Lichtquelle angeordneten Kollimationsoptik ein Kohärenzminderer, insbesondere eine speckle Unterdrückung, positioniert sein kann. Die Musterplatte wird von einer Beleuchtungseinheit beleuchtet. Im Falle von teilkohärenten oder kohärenten Lichtquellen kann ebenso ein Kohärenzminderer vorgesehen sein. Dieser kann beispielsweise aus doppelbrechenden planparallelen Platten bestehen, die in den kollimierten Strahl eingebracht werden. Damit erfolgt eine Kohärenzminderung bei kohärenten oder teilkohärenten Lichtquellen, um eine Abbildungsgüte zu verbessern.

Gemäß einer weiteren vorteilhaften Ausgestaltung kann eine Mehrzahl von Platten im Strahlengang hintereinander angeordnet sein, wobei Hauptachsen einer jeweiligen Platte zu den Hauptachsen der vorangehenden Platte um einen Winkel, insbesondere um 45 Grad, verdreht sein kann. Man kann von einer Kaskadierung sprechen. So entstehen für jeden Strahl zwei weitere Strahlen, die dann allerdings wieder teilweise zueinander kohärent sind, solange die zeitliche Kohärenz der Lichtquelle größer ist als der zeitliche Versatz der Wellenfronten aufgrund der Verzögerung durch die Doppelbrechung bzw. der laterale Versatz kleiner ist, als die räumliche Kohärenz der Lichtquelle. Nach n Platten ergibt sich dann eine Überlagerung von 2ⁿ-Strahlen, was den Kontrast von Kohärenzeffekten bei kohärenten und teilkohärenten Lichtbündeln mindert.

Gemäß einer weiteren vorteilhaften Ausgestaltung kann ein jeweiliges Kalibriermuster geometrische Formen, insbesondere Punkte, Kreise, Kreuze, Quadrate oder Linienstücke aufweisen. Die Musterplatte erzeugt dabei das für die Kalibrierung gewünschte Muster, das aus Linien, Gittern, Punkten, Kreisen, Kreuzen, Quadraten oder anderen geometrischen Formen bestehen kann. Diese Formen können regelmäßig angeordnet sein.

Ein Kohärenzminderer ist vorteilhafterweise zwischen Kollimationsoptik und Musterplatte angeordnet.

Gemäß einer weiteren vorteilhaften Ausgestaltung können die geometrischen Formen ortscodiert sein. Es ist von Vorteil, wenn das projizierte Muster Strukturen enthält, die eine eindeutige Lokalisierung und Orientierung des Musters im Erfassungsbereich des Messgerätes ermöglichen. So kann dann eindeutig die Lage des Musters relativ zum Erfassungsbereich des Messgerätes, das beispielsweise eine Kamera sein kann, bestimmt werden.

Gemäß einer weiteren vorteilhaften Ausgestaltung können die geometrischen Formen eine vorbestimmte Winkelgröße aufweisen. Die in den Raum projizierten Muster des Musterprojektors werden ebenso als Winkelobjekte projiziert, also als Objekte, die eine vorbestimmte Winkelgröße haben. Ein Musterprojektor zur Erzeugung des Kalibrierobjektes wird als Winkelobjekt aufgefasst.

Gemäß einer weiteren vorteilhaften Ausgestaltung kann mittels einer Rechnereinrichtung ein Winkelfehler zwischen zueinander verschobenen Teilen mittels Triangulation bei der Kalibrierung berücksichtig werden. Ergibt sich bei der Strahlaufspaltung ein Winkelfehler zwischen den aufgespaltenen Teilen, so kann dieser bestimmt und bei der Kalibrierung berücksichtigt werden, da man aus der Triangulation mit dem Basisabstand und zweier Winkel von Strukturen, die sich auf der Wand, beispielsweise überlagern, dann der lokale Abstand der Wand bestimmt werden kann.

Gemäß einer weiteren vorteilhaften Ausgestaltung kann die gesamte Vorrichtung oder können Bestandteile der Vorrichtung und der Erfassungsbereich des Messgerätes oder die ebene Wand oder ebene Fläche relativ zueinander verfahrbar sein. D. h. der Kalibrierprojektor und/oder der Messaufbau kann relativ zu der Wand verfahren werden. Es sind folgende unterschiedliche Kalibrierszenarien möglich:
1. Der Kalibrierprojektor ortsfest zur ebenen Fläche, wobei der Messaufbau verschoben wird.
2. Der Kalibrierprojektor und der Messaufbau werden gemeinsam relativ zur ebenen Fläche verschoben.
3. Der Kalibrierprojektor und der Messaufbau werden unabhängig relativ zur ebenen Fläche verschoben.

Gemäß einer weiteren vorteilhaften Ausgestaltung kann der Lichtprojektor Material mit niedrigen thermischen Expansionskoeffizienten, insbesondere Zerodur, Suprasil, fused silica aufweisen. Es wird die Winkelkalibrierung des Musterprojektors als eine bekannte Größe vorausgesetzt. Wird der Musterprojektor aus einem LTE-Material, d. h. mit einem niedrigen thermischen Expansionskoeffizienten gefertigt, wie es beispielsweise Zerodur, Suprasil, fused silica usw. sind, so bleibt die Kalibrierung ebenso bei größeren Temperaturänderungen bestehen.

Gemäß einer weiteren vorteilhaften Ausgestaltung kann der Lichtprojektor, insbesondere mittels einer Absorptionszelle oder einer Referenzstation, optisch stabilisiert sein. Auf diese Weise kann die Wellenlänge des zur Projektion verwendeten Lichts möglichst konstant gehalten werden, was über eine optische Stabilisierung beispielsweise mittels einer Absorptionszelle oder Referenzstation bewirkt werden kann.

Weitere vorteilhafte Ausgestaltungen werden in Verbindung mit den Figuren näher beschrieben. Es zeigen:
- Figur 1: zeigt ein erstes Ausführungsbeispiel einer erfindungsgemäßen Vorrichtung;
- Figur 2: zeigt ein zweites Ausführungsbeispiel einer erfindungsgemäßen Vorrichtung;
- Figur 3: zeigt ein drittes Ausführungsbeispiel einer erfindungsgemäßen Vorrichtung;
- Figur 4: zeigt ein viertes Ausführungsbeispiel einer erfindungsgemäßen Vorrichtung;
- Figur 5: zeigt ein erstes Ausführungsbeispiel eines erfindungsgemäßen Verfahrens;
- Figur 6: zeigt eine erste Darstellung zur Musterprojektion;
- Figur 7: zeigt eine zweite Darstellung zur Musterprojektion;
- Figur 8: zeigt eine dritte Darstellung zur Musterprojektion;
- Figur 9: zeigt ein zweites Ausführungsbeispiel eines erfindungsgemäßen Verfahrens.

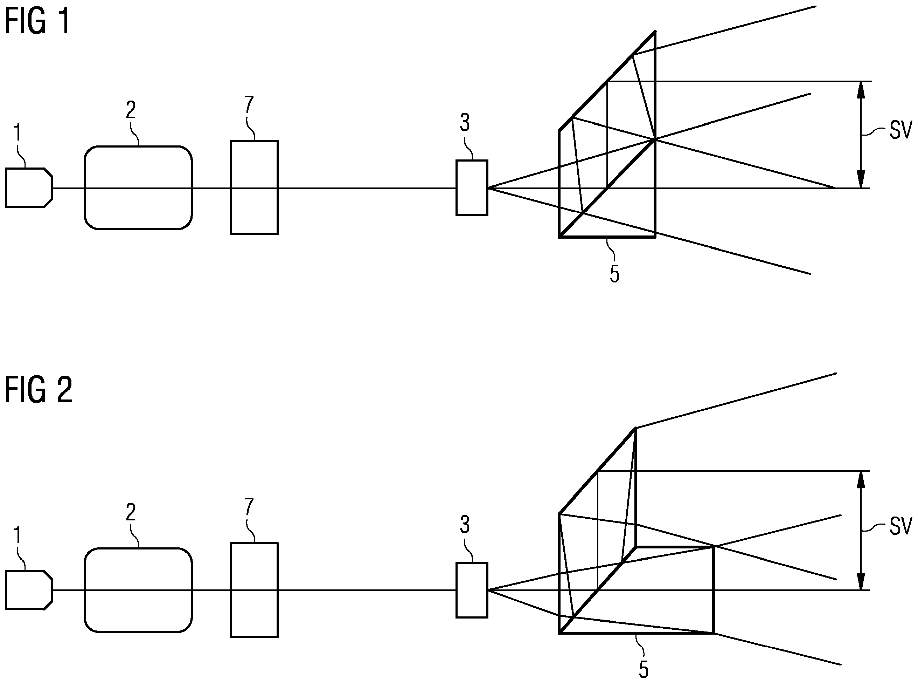

Figur 1 zeigt ein erstes Ausführungsbeispiel einer erfindungsgemäßen Vorrichtung. Figur 1 zeigt eine Vorrichtung zur Kalibrierung eines Messgerätes, das zur Vermessung eines Messobjektes verwendet wird. Dabei eignet sich eine erfindungsgemäße Vorrichtung insbesondere für Messobjekte, die sich im Raum im Bereich von 0 bis beispielsweise 6 m je Raumachse erstrecken. Das Messgerät hat einen das gesamte Messobjekt erfassenden Erfassungsbereich. Mittels eines Lichtprojektors können verschiedene Kalibriermuster Ni in den Erfassungsbereich des Messgerätes auf eine ebene Wand oder eine ebene Fläche projiziert werden. Dabei bezeichnet das Bezugszeichen 1 eine Lichtquelle, die insbesondere als ein Laser ausgebildet sein kann. Bezugszeichen 2 bezeichnet eine Kollimationsoptik, der sich ein Kohärenzminderer 7, insbesondere in Ausgestaltung einer speckle Unterdrückung, anschließen kann. Im weiteren Strahlenverlauf von der Lichtquelle 1 ist ein Mustergenerator 3 positioniert, der insbesondere als eine Musterplatte ausgebildet sein kann. Dem folgt im Strahlengang ein Polarisator oder Strahlenteiler 5, der mindestens zwei mit einem einem Maßverkörperung bereitstellenden Strahlversatz zueinander lateral räumlich verschobene Kalibriermuster M1 und M2 erzeugen kann. Dieser Strahlversatz ist eine laterale Maßverkörperung. Dieser Strahlversatz sollte sich möglichst genau zwischen zwei parallelen Strahlen ausbilden, die aus der Vorrichtung wieder austreten. Figur 1 stellt lediglich das Prinzip dar und berücksichtigt nicht die Laufwege des Lichtes im Strahlteiler 5 und dort ebenso keine Effekte in Folge einer Brechung des Lichts. Damit veranschaulicht Figur 1 das Konzept eines erfindungsgemäßen Kalibrierverfahrens. Bei der Vermessung großer Strukturen als Messobjekte stellt sich ebenso immer die Frage nach einer geeigneten Kalibrierung. Dazu gibt es herkömmlicherweise unterschiedliche Ansätze, die zu unterschiedlichen erreichbaren Genauigkeiten führen bzw. einen deutlich unterschiedlichen Aufwand erfordern. Herkömmliche Ausführungsbeispiele sind beispielsweise Kalibriertafeln. Nachteiligerweise werden die Kalibriertafeln bei Messfeldern > 0,5 m² groß, schwer und unhandlich und zudem bei größeren Genauigkeitsanforderungen ebenso teuer. Eine weitere herkömmliche Lösung stellt die Fotogrammmetrie dar. Dabei wird zur Kalibrierung des Systems eine Anzahl von Kalibriermarken am Messobjekt oder in dem Raum des Erfassungsbereiches angebracht und daran das System kalibriert. Nach der Kalibrierung werden die Kalibriermarken wieder eingesammelt. Sind die Kalibriermarken am Messobjekt angebracht, dann verdecken sie typischerweise ebenso Teile des Objektes, die bei der Messung dann nicht erfasst werden können.

Bei stereoskopischen Systemen mit zwei Kameras muss neben der Kalibrierung des Messvolumens für die Kameras aus der Erfassung der Disparität dann eine Tiefenkarte erstellt werden. Für die laterale Dimensionsbestimmung wird typischerweise ein Maßstab bzw. eine Maßverkörperung in mindestens einer Messung aus dem Kalibrierdatensatz mit aufgenommen. So kann im Prinzip das System in seinem Messvolumen kalibriert werden.

Figur 1 veranschaulicht das erfindungsgemäße Konzept des Kalibrierverfahrens, wobei ein Lichtmuster auf das Messobjekt zur Kalibrierung projiziert wird. Dies kann ebenso während der Messung und damit simultan zur Datenaufnahme ausgeführt werden.

Es ergeben sich mehrere verschiedenartige Lichtmuster als Ausführungsbeispiele für Lichtmuster. Muster können aus geometrischen Formen, beispielsweise Punkte, Kreise, Kreuze oder Linienstücke gebildet werden. Des Weiteren kann die Anordnung der geometrischen Formen mit einer Codierung des Ortes geschaffen sein. Beispielsweise kann dies über die Anordnung der Formen relativ zueinander ausgeführt werden, wobei die Codierung sich nach größeren Teilbereichen des Erfassungsbereichs wiederholen kann. Zur Einbringung eines Maßstabes kann das Lichtmuster verdoppelt werden und beide Lichtmuster können relativ zueinander verschoben sein, um über das doppelte Muster dann ebenso eine Skala mit zu projizieren. Dabei kann eine Verschiebung der beiden Muster entlang einer Achse ausgeführt werden, die zur Basislinie, die ebenso Epipolarlinie bezeichnet werden kann, der Triangulation geneigt ist und vorzugsweise in einer Ebene liegt, die senkrecht auf der optischen Achse des eingestrahlten Lichtes liegt. Eine Trennung der beiden Lichtmuster M1 und M2 kann mittels Polarisation oder mittels eines polarisationsneutralen Strahlenteilers 5 ausgeführt werden. Alternativ dazu können die beiden Lichtmuster mit zwei unterschiedlichen Lichtfarben bzw. Lichtwellenlängen erzeugt werden.

Figur 2 zeigt ein zweites Ausführungsbeispiel einer erfindungsgemäßen Vorrichtung. Im Unterschied zu Figur 1 berücksichtigt Figur 2 schematisch die Brechung auf den Lichtwegen im Strahlteiler 5.

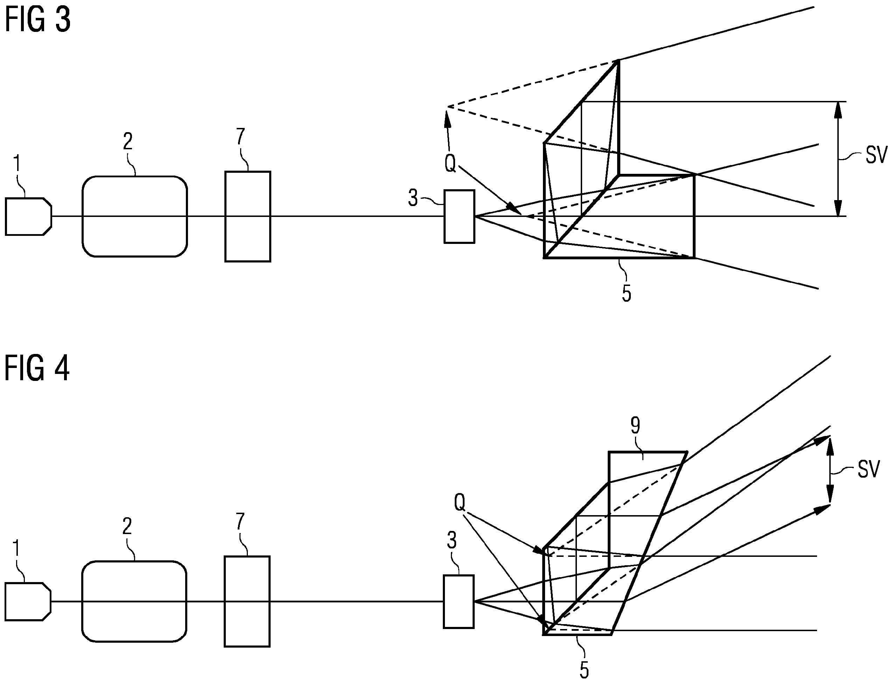

Figur 3 zeigt ein drittes Ausführungsbeispiel einer erfindungsgemäßen Vorrichtung. Im Unterschied zu Figur 1 berücksichtigt Figur 3 schematisch die Brechung auf den Lichtwegen im grauen Strahlteiler 5. Dabei stellt das Bezugszeichen Q einen effektiven Quellort des Musterprojektors bzw. der Vorrichtung dar.

Die gestrichelten Linien für die effektiven Quellorte Q der Vorrichtung zeigen, dass diese über die Strahlteiler 5 lateral versetzt sind und zudem über die Glaswege ebenso axial verschoben sind. Die axiale Verschiebung bewirkt, dass die beiden Muster M1 und M2 mit unterschiedlicher Größe auf der Wand aufgefangen werden. So haben entsprechende Punkte auf der Wand dann einen Versatz, der sich aus dem lateralen Versatz aufgrund der Strahlteilung und einem zusätzlichen Versatz aufgrund der axialen Verschiebung der Quellorte Q zusammensetzt. Der zusätzliche Versatz ist ortsabhängig im Muster und hängt vom Abstrahlwinkel des Mustergenerators 3 für das betreffende Element ab. Bei sich entsprechenden Elementen ist der Versatz konstant, aber zwischen den Elementen aufgrund des Abstrahlwinkels unterschiedlich.

Figur 4 zeigt ein viertes Ausführungsbeispiel einer erfindungsgemäßen Vorrichtung. In Figur 4 ist ebenso ein effektiver Quellort Q der Vorrichtung dargestellt. Zudem ist in Figur 4 ein Korrekturprisma 9 eingebracht. Figur 4 berücksichtigt schematisch die Brechung auf den Lichtwegen im grauen Strahlteiler 5. Entsprechend Figuren 1 bis 3, wird ebenso in Figur 4 ein Strahlversatz S4 erzeugt, der als ein lateraler Maßstab verwendbar ist.

Die gestrichelten Linien für die effektiven Quellorte Q der Vorrichtung bzw. des Musterprojektors zeigen, dass diese über den Strahlteiler 5 lateral versetzt sind und zudem über die Glaswege ebenso axial verschoben sind. Die axiale Verschiebung kann mittels eines Korrekturprismas 9 eingestellt werden und über einen ausgezeichneten bzw. bestimmten Prismenwinkel α symmetrisch auch vollständig abgeglichen werden. Dieser ausgezeichnete Winkel hängt ab von der Wellenlänge und dem Brechungsindex bzw. der Dispersion des verwendeten Glasmaterials.

Die Baugruppe des Teilers 5 besteht beispielsweise aus einem Dreiecksprisma und einem Rhomboeder, das ein Prisma mit Parallelogramm als Grundfläche ist, und einem Korrekturprisma. Der vorgeschlagene monolithische Aufbau ermöglicht maximale Stabilität, und zwar mechanisch sowie thermisch, und kann aus Quarzglas gefertigt sein. Zur weiteren Optimierung kann der Mustergenerator ebenso auf der Frontfläche des Strahlteilers 5 angeordnet sein. Optische Reflektionsverluste der Gruppe des Strahlteilers 5 können über nichtreflektierende Beschichtungen bzw. mittels Ansprengen der Fläche minimiert werden.

In Folge der Verwendung des Korrekturprismas 9 haben gemäß Figur 4 die effektiven Quellorte Q im Unterschied zu Figur 3 eine in axialer Richtung vertauschte Position. Dies zeigt, dass ebenso eine vollständige Korrektur möglich ist. Damit zeigt Figur 4 ein Prinzipbild einer erfindungsgemäßen Vorrichtung in Ausgestaltung einer im Unterschied zu Figur 3 symmetrisierten Strahlachse.

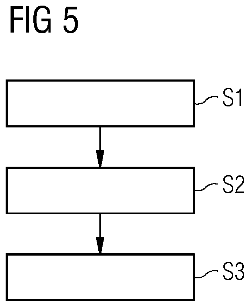

Figur 5 zeigt ein erstes Ausführungsbeispiel eines erfindungsgemäßen Verfahrens. Mit dem Verfahren wird ein Messgerät kalibriert, das Messobjekte vermessen soll, die sich im Bereich von Metern im Raum erstrecken. Dabei wird eine erfindungsgemäße Vorrichtung in einem ersten Schritt S1 in den Erfassungsbereich des Messgerätes dadurch eingebracht, dass die erfindungsgemäße Vorrichtung mittels eines Lichtprojektors ein erstes Muster M1 in den Erfassungsbereich des Messgerätes in Richtung auf eine ebene Wand oder ebene Fläche projiziert.

In einem zweiten Schritt S2 erfolgt mittels eines Polarisators oder eines Strahlenteilers oder durch Veränderung der Lichtwellenlänge der Lichtquelle eines weiteren Kalibriermusters M2, das mit einem Strahlversatz lateral räumlich zu dem ersten Kalibriermuster M1 verschoben ist. Der Strahlversatz stellt auf diese Weise einen Maßstab dar, mit dem Messgeräte miteinander verglichen werden können. Mit einem dritten Schritt S3 kann mittels einer Rechnereinrichtung ein Winkelfehler zwischen zueinander verschobenen Teilen der Kalibriermuster M1 und M2 mittels Triangulation bei der Kalibrierung berücksichtigt werden.

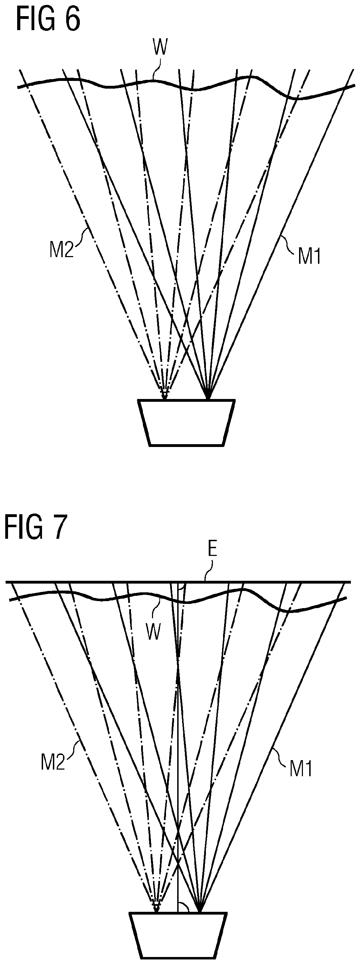

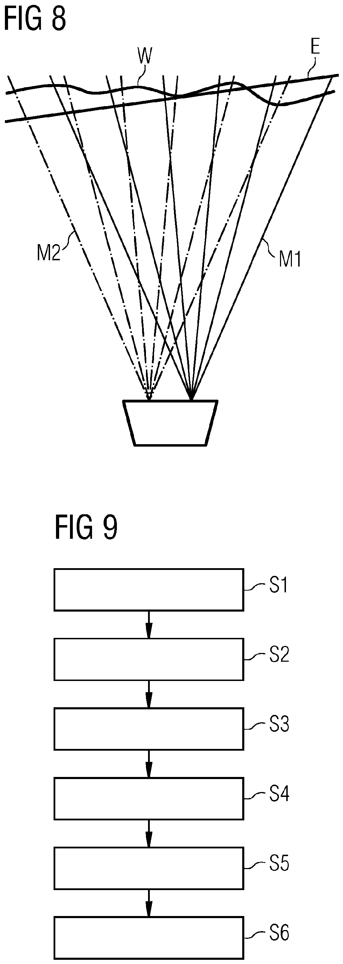

Figur 6 zeigt eine erste Darstellung zur Optimierung eines erfindungsgemäßen Verfahrens. Und dabei stellt Figur 6 das Projizieren eines ersten Kalibriermusters M1 und eines zweiten dazu lateral versetzten zweiten Kalibriermusters M2 dar. Dies stellen ebenso Figuren 7 und Figur 8 dar.

Dabei stellt das Bezugszeichen W eine reale ebene Wand oder eine reale ebene Fläche dar.

In Verbindung mit den Figuren 6, 7 und 8 wird folgende Optimierung eines erfindungsgemäßen Verfahrens der Kalibrierung mit folgenden Schritten vorgeschlagen:
In einem ersten Schritt erfolgt eine Aufnahme von Bildern mit der zu kalibrierenden Kamera bzw. mit den zu kalibrierenden Kameras als Ausführungsbeispiele von Messgeräten. In einem zweiten Schritt S2 erfolgt ein Bestimmen der Orte der Punkte bzw. Objekte des projizierten Kalibriermusters im jeweiligen Kamerabild. Mit einem dritten Schritt S3 erfolgt ein Bestimmen der Strahlrichtungen der Projektionsstrahlen für jeden der Punkte bzw. für jedes der Objekte aus dem Satz der aufgenommenen Kalibrierbilder. Im Ergebnis dieses Verfahrensschrittes S3 liegt dann für den Kalibrierprojektor ein Richtungsfeld mit Strahlrichtungen vor. Eine laterale Dimension gibt es noch nicht. Bei diesem dritten Schritt S3 kann die Näherungsannahme getroffen werden, dass die Fläche auf die die Kalibriermuster bzw. Kalibriermarken projiziert wurden, eine ebene Fläche ist. Dies ist vermutlich lediglich dann erforderlich, wenn man eine lineare Maßverkörperung für die erste Berechnung benötigt, die aus der Projektion der zwei lateral verschobenen Muster M1 und Muster M2 dann näherungsweise gewonnen werden kann. Da aber der Musterprojektor relativ zur Wand während der Aufnahme aller Bilder in fester Position verbleibt, sollte eine relative Kalibrierung ohne metrische Information ebenso ohne diesen Schritt möglich sein.

In einem vierten Schritt S4 erfolgt ein Berechnen einer virtuellen Kalibrierebene E, wobei für alle Punkte bzw. Objekte aus dem projizierten Muster die idealen Auftrefforte der Strahlen auf der idealen Ebene E, also eine mathematisch exakte ebene Fläche E, exakt bestimmt werden. In dieser Ebene E kann dann ebenso die metrische Kalibrierung erfolgen, da hier die beiden projizierten Muster M1 und M2 den aus der Projektionsvorrichtung vorbestimmten Abstand aufweisen. Dieser Abstand kann gegebenenfalls um geometrische Effekte aus der relativen Lage von Projektionsvorrichtung und der virtuellen Kalibrierebene E korrigiert sein. Ebenso können bei dieser Korrektur ebenso vorbekannte bzw. bei einer vorherigen Kalibrierung bzw. Werkskalibrierung bestimmte Ungenauigkeiten der relativen Lage und Orientierung der projizierten Muster Mi ebenfalls rechnerisch mitberücksichtigt werden.

In einem fünften Schritt S5 erfolgt ein Erstellen eines finalen Kalibrierdatensatzes für diese Kalibrierung für den zu kalibrierenden Messaufbau.

Mit einem sechsten Schritt S6 erfolgt ein Bereitstellen des Kalibrierdatensatzes für die Verwendung in einer Messung beispielsweise mittels einer Mess- und/oder Auswertesoftware.

Die im vierten Schritt S4 berechnete virtuelle Kalibrierebene E kann gemäß Figur 7 den idealerweise senkrecht zur mittleren Projektionsrichtung für die projizierten Kalibrierstrukturen bzw. Kalibriermuster M1 und M2 angeordnet sein.

Zur Vermeidung von Umgehungslösungen kann im vierten Schritt S4 verallgemeinert ebenso von einer Kalibrierfläche oder einem Kalibrierkörper bekannter Geometrie gesprochen werden, die beispielsweise der in einer bevorzugten Ausgestaltung zu einer Ebene wird.

Viele Verfahren zur Kalibrierung von kamerabasierten Messsystemen optimieren in einem gemeinsamen Schritt in trinsische und externe Kalibrierparameter. Dabei beschreiben die intrinsischen Kalibrierparameter die Eigenschaften der Kamera und des Objektivs, in der für die Kalibrierung gewählten Einstellung.

Die externen Parameter umfassen dann ebenso die Eigenschaften des Kalibrierobjektes.

Das hier vorgeschlagene Verfahren ist sowohl für eine stufenweise Bestimmung der Kalibrierparameter geeignet. Beispielsweise werden erst die intrinsischen Parameter und danach in mindestens einem weiteren Schritt die externen Parameter bestimmt. Alternativ kann die komplette Kalibrierung ebenso in einem Schritt ausgeführt werden.

Um den Rechenaufwand und ebenso den Kalibrieraufwand z. B. über die Zahl der benötigten Bilder zu reduzieren, ist es ebenso möglich, z. B. im Falle einer Nachkalibrierung, dass die intrinsischen Parameter beibehalten werden und von der Nachkalibrierung lediglich die externen Parameter zumindest neu bestimmt bzw. optimiert werden.

Eine minimale Variante wäre es, ein Muster bereitzustellen, das mindestens zwei zueinander parallele Strahlen aufweist. Alternativ könnte es ein Muster sein und ein weiterer Lichtstrahl bzw. ein weiteres Muster, dass auf einen parallelen Strahlweg zu einem der Projektionswege zu einem der Strahlen/Objekte aus dem Muster ist.

Alternativ könnten ebenso einfach zwei Muster M1 und M2 mit bekannter Winkelverteilung für die projizierten Strahlen bzw. Objekte projiziert werden. Aus der relativen Lage der Strahlen bzw. Objekte aus den beiden Mustern kann der Abstand des Projektors zur Wand für verschiedene Bereiche des Bildes berechnet werden. Daraus kann die Lage der Projektionswand berechnet werden und zusammen mit Abstand der beiden Muster M1 und M2, den jeweiligen - gegebenenfalls vorab kalibrierten Winkelverteilungen - dann der laterale Abstand der einzelnen Punkte als lokale Maßverkörperungen auf der Projektionswand bestimmt werden, sodass eine vollständige Kalibrierung einschließlich der Metrik möglich wird. Mit der hier als Kernidee vorgestellten virtuellen Ebene E kann die Genauigkeit einer erfindungsgemäßen Vorrichtung bzw. eines erfindungsgemäßen Verfahrens wirksam vergrößert werden.

Figur 9 zeigt ein zweites Ausführungsbeispiel eines erfindungsgemäßen Verfahrens. Wesentlicher Schritt des Verfahrens gemäß Figur 9 ist der vierte Schritt S4, bei dem in dem Richtungsfeld des Musterprojektors bzw. der erfindungsgemäßen Vorrichtung für die projizierten Punkte/Objekte zur metrischen Kalibrierung ebenso eine virtuelle Ebene E angenommen wird und für diese Ebene E dann die idealen Orte für die Punkte/Objekte bestimmt werden und dann diese Information für die metrische Kalibrierung verwendet werden.

Eine Bestimmung der Kalibrierparameter kann in einem gemeinsamen Schritt für alle Kalibrierparameter oder in mindestens zwei getrennten Schritten ausgeführt werden. Bei mindestens zwei getrennten Schritten kann beispielsweise ein Bestimmen von intrinsischen und von externen Parametern getrennt ausgeführt werden. Weitere getrennte Schritte der Bestimmung von Kalibrierparametern kann dadurch erfolgen, dass lediglich teilweise Kalibrierparameter in einer Nachkalibrierung bzw. zur Kontrolle einer Kalibrierung bestimmt werden.

Figur 8 zeigt ein Ausführungsbeispiel einer virtuellen idealen Ebene E zur metrischen Kalibrierung, wobei die ideale Ebene E frei gewählt ist, aber eine fixe Lage/Position relativ zur Projektionseinheit im Projektionsbereich beider Muster aufweist. Dabei ist die Lage günstigerweise im Arbeitsbereich des zu kalibrierenden Sensors. Dies ist allerdings nicht zwingend.

## Patentansprüche

1. Vorrichtung zur Kalibrierung eines Messgerätes zur Vermessung eines sich entlang eines Bereichs in Metern im Raum erstreckenden Messobjektes, wobei das Messgerät einen das gesamte Messobjekt erfassenden Erfassungsbereich aufweist, und wobei die Vorrichtung umfasst:
- einen Lichtprojektor, welcher eingerichtet ist, um verschiedene Kalibriermuster (Mi) in den Erfassungsbereich des Messgerätes auf eine reale ebene Wand oder reale ebene Fläche zu projizieren; und
- eine Rechnereinrichtung; und
- das Messgerät, welches eingerichtet ist, die verschiedenen Kalibriermuster (Mi) aufzunehmen;
**dadurch gekennzeichnet, dass**
die Vorrichtung einen Polarisator oder einen Strahlenteiler (5) umfasst, wobei der Polarisator oder der Strahlenteiler (5) eingerichtet ist, um mindestens zwei mit einem eine Maßverkörperung bereitstellenden Strahlversatz (SV) zueinander lateral räumlich verschobene Kalibriermuster (M1, M2) zu erzeugen, wobei der Strahlversatz einem Abstand zwischen zwei parallelen Strahlen, die aus der Vorrichtung austreten, entspricht, wobei die Vorrichtung eingerichtet ist, den Strahlversatz (SV) als Basisabstand zur Kalibrierung der lateralen Dimensionen des Messgeräts zu nutzen, und wobei die Rechnereinrichtung eingerichtet ist, um die reale ebene Wand oder reale ebene Fläche mathematisch als ideal ebene Wand oder ideal ebene Fläche zu berechnen und diese für die Kalibrierung zu verwenden.

2. Vorrichtung gemäß Anspruch 1,
**dadurch gekennzeichnet, dass**
mittels der Rechnereinrichtung und einer Vielzahl von Aufnahmen des Messgerätes die Güte der realen ebenen Wand oder realen ebenen Fläche mathematisch berechnet und deren Einfluss mathematisch berücksichtigt wird.

3. Vorrichtung gemäß einem der vorhergehenden Ansprüche,
**dadurch gekennzeichnet, dass**
mittels der Rechnereinrichtung Kalibrierparameter in einem Schritt oder getrennt intrinsische und externe Kalibrierparameter in zwei Schritten bestimmt werden.

4. Vorrichtung gemäß einem der vorhergehenden Ansprüche,
**dadurch gekennzeichnet, dass**
der Lichtprojektor eine Lichtquelle (1), eine Kollimationsoptik (2) und einen Mustergenerator (3)aufweist.

5. Vorrichtung gemäß Anspruch 4,
**dadurch gekennzeichnet, dass**
der Mustergenerator eine Musterplatte ist, welche als eine Transmissionsstruktur, als refraktive, diffraktive oder reflektierende Struktur oder als ein computergeneriertes Hologramm ausgebildet ist.

6. Vorrichtung gemäß Anspruch 4 oder 5,
**dadurch gekennzeichnet, dass**
der Lichtprojektor eine kohärente oder teilkohärente Lichtquelle (1) aufweist, wobei zwischen Mustergenerator (3) und der im Strahlengang nach der Lichtquelle (1) angeordneten Kollimationsoptik (2) ein Kohärenzminderer (7) positioniert ist.

7. Vorrichtung gemäß dem vorhergehenden Anspruch 6,
**dadurch gekennzeichnet, dass**
der Kohärenzminderer (7) aus doppelbrechenden planparallelen Platten besteht.

8. Vorrichtung gemäß dem vorhergehenden Anspruch 7,
**dadurch gekennzeichnet, dass**
eine Mehrzahl von Platten im Strahlengang hintereinander angeordnet ist, wobei Hauptachsen einer jeweiligen Platte zu den Hauptachsen der vorangehenden Platte um einen Winkel verdreht sind.

9. Vorrichtung gemäß einem der vorhergehenden Ansprüche,
**dadurch gekennzeichnet, dass**
ein jeweiliges Kalibriermuster (M) geometrische Formen aufweist.

10. Vorrichtung gemäß Anspruch 9,
**dadurch gekennzeichnet, dass**
die geometrischen Formen ortscodiert sind.

11. Vorrichtung gemäß Anspruch 9 oder 10,
**dadurch gekennzeichnet, dass**
die geometrischen Formen eine vorbestimmte Winkelgröße aufweisen.

12. Vorrichtung gemäß einem der vorhergehenden Ansprüche,
**dadurch gekennzeichnet, dass**
mittels der Rechnereinrichtung ein Winkelfehler zwischen zueinander verschobenen Teilen der Kalibriermuster (M1, M2) mittels Triangulation bei der Kalibrierung berücksichtigt wird.

13. Vorrichtung gemäß einem der vorhergehenden Ansprüche,
**dadurch gekennzeichnet, dass**
die gesamte Vorrichtung oder Bestandteile der Vorrichtung und der Raum, der Erfassungsbereich oder die ebene Wand oder ebene Fläche relativ zueinander verfahrbar ist.

14. Vorrichtung gemäß einem der vorhergehenden Ansprüche,
**dadurch gekennzeichnet, dass**
der Lichtprojektor Material mit niedrigem thermischen Expansionskoeffizienten aufweist.

15. Vorrichtung gemäß einem der vorhergehenden Ansprüche,
**dadurch gekennzeichnet, dass**
der Lichtprojektor optisch stabilisiert ist.

16. Verfahren zur Kalibrierung eines Messgerätes zur Vermessung eines sich entlang eines Bereichs in Metern im Raum erstreckenden Messobjektes, wobei das Messgerät einen das gesamte Messobjekt erfassenden Erfassungsbereich aufweist, wobei zur Kalibrierung eine Vorrichtung verwendet wird, welche umfasst:
- einen Lichtprojektor, mittels welchem verschiedene Kalibriermuster (Mi) in den Erfassungsbereich des Messgerätes auf eine reale ebene Wand oder reale ebene Fläche projiziert werden (S1);
- eine Recheneinrichtung; und
- das Messgerät, welches die verschiedenen Kalibrierungsmuster (Mi) aufnimmt;
**dadurch gekennzeichnet, dass**
die Vorrichtung einen Polarisator oder einen Strahlenteiler (5) umfasst, wobei mittels des Polarisators oder mittels des Strahlenteilers (5) um mindestens zwei mit einem eine Maßverkörperung bereitstellenden Strahlversatz (SV) zueinander lateral räumlich verschobene Kalibriermuster (M1, M2) erzeugt werden, wobei der Strahlversatz einem Abstand zwischen zwei parallelen Strahlen, die aus der Vorrichtung austreten, entspricht, wobei die Vorrichtung den Strahlversatz (SV) als Basisabstand zur Kalibrierung der lateralen Dimensionen des Messgeräts nutzt, und wobei mittels der Rechnereinrichtung die reale ebene Wand oder reale ebene Fläche mathematisch als ideal ebene Wand oder ideal ebene Fläche berechnet und diese für die Kalibrierung verwendet wird.

17. Verfahren gemäß dem vorhergehenden Anspruch 16,
**dadurch gekennzeichnet, dass**
mittels der Rechnereinrichtung und einer Vielzahl von Aufnahmen des Messgerätes die Güte der realen ebenen Wand oder realen ebenen Fläche mathematisch berechnet und deren Einfluss mathematisch berücksichtigt wird.

18. Verfahren gemäß einem der vorhergehenden Ansprüche 16 oder 17,
**dadurch gekennzeichnet, dass**
mittels einer Rechnereinrichtung Kalibrierparameter in einem Schritt oder getrennt intrinsische und externe Kalibrierparameter in zwei Schritten bestimmt werden.

19. Verfahren gemäß einem der vorhergehenden Ansprüche 16 bis 18,
**dadurch gekennzeichnet, dass**
der Lichtprojektor eine Lichtquelle (1), eine Kollimationsoptik (2) und einen Mustergenerator (3) aufweist.

20. Verfahren gemäß Anspruch 19,
**dadurch gekennzeichnet, dass**
der Mustergenerator eine Musterplatte ist, welche als eine Transmissionsstruktur, als refraktive, diffraktive oder reflektierende Struktur oder als ein computergeneriertes Hologramm ausgebildet ist.

21. Verfahren gemäß einem der vorhergehenden Ansprüche 16 bis 20,
**dadurch gekennzeichnet, dass**
der Lichtprojektor eine kohärente oder teilkohärente Lichtquelle (1) aufweist, wobei zwischen Mustergenerator (3) und einer im Strahlengang nach der Lichtquelle (1) angeordneten Kollimationsoptik (2) ein Kohärenzminderer (7), insbesondere eine Speckleunterdrückung, positioniert ist.

22. Verfahren gemäß dem vorhergehenden Anspruch 21,
**dadurch gekennzeichnet, dass**
der Kohärenzminderer (7) aus doppelbrechenden planparallelen Platten besteht.

23. Verfahren gemäß dem vorhergehenden Anspruch 22,
**dadurch gekennzeichnet, dass**
eine Mehrzahl von Platten im Strahlengang hintereinander angeordnet ist, wobei Hauptachsen einer jeweiligen Platte zu den Hauptachsen der vorangehenden Platte um einen Winkel, insbesondere um 45°, verdreht sind.

24. Verfahren gemäß einem der vorhergehenden Ansprüche 16 bis 23,
**dadurch gekennzeichnet, dass**
ein jeweiliges Kalibriermuster (M) geometrische Formen, insbesondere Punkte, Kreise, Kreuze, Quadrate oder Linienstücke, aufweist.

25. Verfahren gemäß Anspruch 24,
**dadurch gekennzeichnet, dass**
die geometrischen Formen ortscodiert sind.

26. Verfahren gemäß Anspruch 24 oder 25,
**dadurch gekennzeichnet, dass**
die geometrischen Formen eine vorbestimmte Winkelgröße aufweisen.

27. Verfahren gemäß einem der vorhergehenden Ansprüche 16 bis 26,
**dadurch gekennzeichnet, dass**
mittels der Rechnereinrichtung ein Winkelfehler zwischen zueinander verschobenen Teilen der Kalibriermuster (M1, M2) mittels Triangulation bei der Kalibrierung berücksichtigt wird (S3).

28. Verfahren gemäß einem der vorhergehenden Ansprüche 16 bis 27,
**dadurch gekennzeichnet, dass**
die gesamte Vorrichtung oder Bestandteile der Vorrichtung und der Raum, der Erfassungsbereich oder die ebene Wand oder ebene Fläche relativ zueinander verfahrbar ist.

29. Verfahren gemäß einem der vorhergehenden Ansprüche 16 bis 28,
**dadurch gekennzeichnet, dass**
der Lichtprojektor Material mit niedrigem thermischen Expansionskoeffizienten, insbesondere Zerodur, Suprasil, fused Silica, aufweist.

30. Verfahren gemäß einem der vorhergehenden Ansprüche 16 bis 29,
**dadurch gekennzeichnet, dass**
der Lichtprojektor, insbesondere mittels einer Absorptionszelle oder einer Referenzstation, optisch stabilisiert ist.

## Claims

1. Device for calibrating a measuring apparatus for measuring a measurement object extending along a region in meters in space, the measuring apparatus having a recording region which records the entire measurement object, and the device comprising:
- a light projector which is adapted in order to project different calibration patterns (Mi) into the recording region of the measuring apparatus onto a real plane wall or real plane surface; and
- a computer instrument; and
- the measuring apparatus, which is adapted to record the different calibration patterns (Mi);
**characterized in that**
the device comprises a polarizer or a beam splitter (5), the polarizer or the beam splitter (5) being adapted in order to generate at least two calibration patterns (M1, M2) laterally spatially displaced with respect to one another by a beam offset (SV) providing a measurement reference, the beam offset corresponding to a distance between two parallel beams which emerge from the device, the device being adapted in order to use the beam offset (SV) as a basic distance for calibration of the lateral dimensions of the measuring apparatus, and the computer instrument being adapted in order to mathematically calculate the real plane wall or real plane surface as an ideally plane wall or ideally plane surface, and to use this for the calibration.

2. Device according to Claim 1,
**characterized in that**
by means of the computer instrument and a plurality of recordings of the measuring apparatus, the quality of the real plane wall or real plane surface is mathematically calculated and the effect of this quality is mathematically taken into account.

3. Device according to either one of the preceding claims,
**characterized in that**
by means of the computer instrument, calibration parameters are determined in one step or intrinsic and external calibration parameters are determined separately in two steps.

4. Device according to any one of the preceding claims,
**characterized in that**
the light projector comprises a light source (1), collimation optics (2) and a pattern generator (3).

5. Device according to Claim 4,
**characterized in that**
the pattern generator is a pattern plate, which is configured as a transmission structure, as a refractive, diffractive or reflective structure, or as a computer-generated hologram.

6. Device according to Claim 4 or 5,
**characterized in that**
the light projector comprises a coherent or semi-coherent light source (1), a coherence reducer (7) being positioned between the pattern generator (3) and the collimation optics (2) arranged after the light source (1) in the beam path.

7. Device according to the preceding Claim 6,
**characterized in that**
the coherence reducer (7) consists of birefringent plane-parallel plates.

8. Device according to the preceding Claim 7,
**characterized in that**
a multiplicity of plates are arranged successively in the beam path, principal axes of a respective plate being rotated with respect to the principal axes of the preceding plate by an angle.

9. Device according to any one of the preceding claims,
**characterized in that**
a respective calibration pattern (M) comprises geometrical shapes.

10. Device according to Claim 9,
**characterized in that**
the geometrical shapes are position-encoded.

11. Device according to Claim 9 or 10,
**characterized in that**
the geometrical shapes have a predetermined angular size.

12. Device according to any one of the preceding claims,
**characterized in that**
by means of the computer instrument, an angular error between mutually displaced parts of the calibration patterns (M1, M2) is taken into account by means of triangulation during the calibration.

13. Device according to any one of the preceding claims,
**characterized in that**
the entire device or constituent parts of the device and the space, the recording region or the plane wall or plane surface are movable relative to one another.

14. Device according to any one of the preceding claims,
**characterized in that**
the light projector consists of material with a low thermal expansion coefficient.

15. Device according to any one of the preceding claims, **characterized in that**
the light projector is optically stabilized.

16. Method for calibrating a measuring apparatus for measuring a measurement object extending along a region in meters in space, the measuring apparatus having a recording region which records the entire measurement object, a device which comprises the following being used for the calibration:
- a light projector, by means of which different calibration patterns (Mi) are projected (S1) into the recording region of the measuring apparatus onto a real plane wall or real plane surface;
- a computer instrument; and
- the measuring apparatus, which records the different calibration patterns (Mi);
**characterized in that**
the device comprises a polarizer or a beam splitter (5), around at least two calibration patterns (M1, M2) laterally spatially displaced with respect to one another by a beam offset (SV) providing a measurement reference being generated by means of the polarizer or by means of the beam splitter (5), the beam offset corresponding to a distance between two parallel beams which emerge from the device, the device using the beam offset (SV) as a basic distance for calibration of the lateral dimensions of the measuring apparatus, and by means of the computer instrument, the real plane wall or real plane surface being mathematically calculated as an ideally plane wall or ideally plane surface, and this being used for the calibration.

17. Method according to the preceding Claim 16,
**characterized in that**
by means of the computer instrument and a plurality of recordings of the measuring apparatus, the quality of the real plane wall or real plane surface is mathematically calculated and the effect of this quality is mathematically taken into account.

18. Method according to either one of the preceding Claims 16 and 17,
**characterized in that**
by means of a computer instrument, calibration parameters are determined in one step or intrinsic and external calibration parameters are determined separately in two steps.

19. Method according to any one of the preceding Claims 16 to 18,
**characterized in that**
the light projector comprises a light source (1), collimation optics (2) and a pattern generator (3).

20. Method according to Claim 19,
**characterized in that**
the pattern generator is a pattern plate, which is configured as a transmission structure, as a refractive, diffractive or reflective structure, or as a computer-generated hologram.

21. Method according to any one of the preceding Claims 16 to 20,
**characterized in that**
the light projector comprises a coherent or semi-coherent light source (1), a coherence reducer (7), in particular speckle suppression, being positioned between the pattern generator (3) and collimation optics (2) arranged after the light source (1) in the beam path.

22. Method according to the preceding Claim 21,
**characterized in that**
the coherence reducer (7) consists of birefringent plane-parallel plates.

23. Method according to the preceding Claim 22,
**characterized in that**
a multiplicity of plates are arranged successively in the beam path, principal axes of a respective plate being rotated with respect to the principal axes of the preceding plate by an angle, in particular by 45°.

24. Method according to any one of the preceding Claims 16 to 23,
**characterized in that**
a respective calibration pattern (M) comprises geometrical shapes, in particular points, circles, crosses, squares or line portions.

25. Method according to Claim 24,
**characterized in that**
the geometrical shapes are position-encoded.

26. Method according to Claim 24 or 25,
**characterized in that**
the geometrical shapes have a predetermined angular size.

27. Method according to any one of the preceding Claims 16 to 26,
**characterized in that**
by means of the computer instrument, an angular error between mutually displaced parts of the calibration patterns (M1, M2) is taken into account (S3) by means of triangulation during the calibration.

28. Method according to any one of the preceding Claims 16 to 27,
**characterized in that**
the entire device or constituent parts of the device and the space, the recording region or the plane wall or plane surface are movable relative to one another.

29. Method according to any one of the preceding Claims 16 to 28,
**characterized in that**
the light projector consists of material with a low thermal expansion coefficient, in particular Zerodur, Suprasil, fused silica.

30. Method according to any one of the preceding Claims 16 to 29,
**characterized in that**
the light projector is optically stabilized, in particular by means of an absorption cell or a reference station.

## Revendications

1. Système d'étalonnage d'un appareil de mesure pour la mesure d'un objet à mesurer, s'étendant dans l'espace dans une plage en mètres, l'appareil de mesure ayant une plage de détection détectant l'ensemble de l'objet de mesure, et dans lequel le système comprend :
- un projecteur de lumière, qui est conçu pour projeter des modèles (Mi) d'étalonnage différents dans la plage de détection de l'appareil de mesure sur une paroi plane réelle ou une surface plane réelle ; et
- un dispositif d'ordinateur ; et
- l'appareil de mesure, qui est conçu pour enregistrer les différents modèles (Mi) d'étalonnage ;
**caractérisé en ce que**
le système comprend un polariseur ou un diviseur (5) de faisceaux, le polariseur ou le diviseur (5) de faisceaux étant conçu pour produire au moins deux modèles (M1, M2) d'étalonnage, décalés l'un de l'autre latéralement dans l'espace, ayant un décalage (SV) de faisceaux procurant une représentation de mesure, le décalage de faisceaux correspondant à une distance entre deux faisceaux parallèles, qui sortent du système, le système étant conçu pour utiliser le décalage (SV) de faisceaux, comme distance de base pour l'étalonnage des dimensions latérales de l'appareil de mesure et le dispositif d'ordinateur étant conçu pour calculer la paroi plane réelle ou la surface plane réelle mathématiquement, comme paroi plane idéalement ou surface plane idéalement et l'utiliser pour l'étalonnage.

2. Système suivant la revendication 1,
**caractérisé en ce qu'**
au moyen du dispositif d'ordinateur et d'une pluralité d'enregistrements de l'appareil de mesure, on calcule mathématiquement la qualité de la paroi plane réelle ou de la surface plane réelle et on prend en compte mathématiquement son influence.

3. Système suivant l'une des revendications précédentes,
**caractérisé en ce qu'**
au moyen du dispositif d'ordinateur, on détermine des paramètres d'étalonnage dans un stade ou, séparément, des paramètres intrinsèques extérieurs d'étalonnage en deux stades.

4. Système suivant l'une des revendications précédentes,
**caractérisé en ce que**
le projecteur de lumière a une source (1) de lumière, une optique (2) de collimation et un générateur (3) de modèle.

5. Système suivant la revendication 4,
**caractérisé en ce que**
le générateur de modèle est une lame de modèle, qui est constituée sous la forme d'une structure de transmission, sous la forme d'une structure de réfraction, de diffraction ou de réflexion ou sous la forme d'un hologramme produit par ordinateur.

6. Système suivant la revendication 4 ou 5,
**caractérisé en ce que**
le projecteur de lumière a une source (1) de lumière cohérente ou partiellement cohérente, un réducteur (7) de cohérence étant placé entre le générateur (3) de modèle et l'optique (2) de collimation montée après la source (1) de lumière dans le trajet des faisceaux.

7. Système suivant la revendication 6 précédente,
**caractérisé en ce que**
le réducteur (7) de cohérence est constitué de lames planes parallèles biréfringentes.

8. Système suivant la revendication 7 précédente,
**caractérisé en ce qu'**
une pluralité de lames sont montées les unes derrière les autres dans le trajet des faisceaux, des axes principaux d'une lame respective étant tournés d'un certain angle par rapport aux axes principaux de la lame précédente.

9. Système suivant l'une des revendications précédentes,
**caractérisé en ce qu'**
un modèle (M) d'étalonnage respectif a des formes géométriques.

10. Système suivant la revendication 9,
**caractérisé en ce que**
les formes géométriques sont codées spatialement.

11. Système suivant la revendication 9 ou 10,
**caractérisé en ce que**
les formes géométriques ont une dimension angulaire déterminée à l'avance.

12. Système suivant l'une des revendications précédentes,
**caractérisé en ce qu'**
au moyen du dispositif d'ordinateur, on prend en compte, au moyen d'une triangulation lors de l'étalonnage, un défaut angulaire entre des parties décalées les unes par rapport aux autres des motifs (M1, M2) d'étalonnage.

13. Système suivant l'une des revendications précédentes,
**caractérisé en ce que**
tout le système ou des parties constitutives du système et l'espace, la plage de détection ou la paroi plane ou la surface plane peuvent être déplacés les uns par rapport aux autres.

14. Système suivant l'une des revendications précédentes,
**caractérisé en ce que**
le projecteur de lumière a du matériau ayant un petit coefficient de dilatation thermique.

15. Système suivant l'une des revendications précédentes,
**caractérisé en ce que**
le projecteur de lumière est stabilisé optiquement.

16. Procédé d'étalonnage d'un appareil de mesure pour la mesure d'un objet à mesurer, s'étendant dans l'espace dans une plage en mètres, l'appareil de mesure ayant une plage de détection détectant l'ensemble de l'objet de mesure, dans lequel on utilise, pour l'étalonnage, un système, qui comprend :
- un projecteur de lumière, au moyen duquel on projette (S1) des modèles (Mi) d'étalonnage différents, dans la plage de détection de l'appareil de mesure, sur une paroi plane réelle ou sur une surface plane réelle ;
- un dispositif d'ordinateur ; et
- l'appareil de mesure, qui enregistre les modèles (Mi) d'étalonnage différents ;
**caractérisé en ce que**
le système comprend un polariseur ou un diviseur (5) de faisceaux, dans lequel, au moyen du polariseur ou au moyen du diviseur (5) de faisceaux, on produit au moins deux modèles (M1, M2) d'étalonnage, décalés dans l'espace latéralement les uns par rapport aux autres, avec un décalage (SV) de faisceaux procurant une représentation de la mesure, le décalage de faisceaux correspondant à une distance entre deux faisceaux parallèles, qui sortent du système, le système utilisant le décalage (SV) de faisceaux comme distance de base pour l'étalonnage des dimensions latérales de l'appareil de mesure, et dans lequel, au moyen du dispositif d'ordinateur, on calcule mathématiquement, comme paroi plane de manière idéale ou surface plane de manière idéale, la paroi plane réelle ou la surface plane réelle et on l'utilise pour l'étalonnage.

17. Procédé suivant la revendication 16 précédente,
**caractérisé en ce qu'**
au moyen du dispositif d'ordinateur et d'une pluralité d'enregistrements de l'appareil de mesure, on calcule mathématiquement la qualité de la paroi plane réelle ou de la surface plane réelle et on tient compte mathématiquement de son influence.

18. Procédé suivant l'une des revendications 16 ou 17 précédentes,
**caractérisé en ce qu'**
au moyen d'un dispositif d'ordinateur, on détermine des paramètres d'étalonnage en un stade ou séparément des paramètres d'étalonnage intrinsèques et extérieurs aux deux stades.

19. Procédé suivant l'une des revendications 16 à 18 précédentes,
**caractérisé en ce que**
le projecteur de lumière a une source (1) de lumière, une optique (2) de collimation et un générateur (3) de modèle.

20. Procédé suivant la revendication 19,
**caractérisé en ce que**
le générateur de modèle est une lame de modèle, qui est constituée sous la forme d'une structure de transmission, sous la forme d'une structure de réfraction, de diffraction ou de réflexion ou sous la forme d'un hologramme produit par ordinateur.

21. Procédé suivant l'une des revendications 16 à 20 précédentes,
**caractérisé en ce que**
le projecteur de lumière a une source (1) de lumière cohérente ou partiellement cohérente, un réducteur (7) de cohérence étant placé entre le générateur (3) de modèle et l'optique (2) de collimation montée après la source (1) lumineuse dans le trajet des faisceaux.

22. Procédé suivant la revendication 21 précédente,
**caractérisé en ce que**
le réducteur (7) de cohérence est constitué de lames planes parallèles biréfringentes.

23. Procédé suivant la revendication 22 précédente,
**caractérisé en ce qu'**
une pluralité de lames sont montées les unes derrière les autres dans le trajet de faisceau, des axes principaux d'une lame respective étant tournés d'un certain angle par rapport aux axes principaux de la lame précédente.

24. Procédé suivant l'une des revendications 16 à 23 précédentes,
**caractérisé en ce qu'**
modèle (M) d'étalonnage respectif a des formes géométriques, notamment des points, des cercles, des croix, des carrés ou des segments de ligne.

25. Procédé suivant la revendication 2,
**caractérisé en ce que**
les formes géométriques sont codées spatialement.

26. Procédé suivant la revendication 24 ou 25,
**caractérisé en ce que**
les formes géométriques ont une dimension angulaire déterminée à l'avance.

27. Procédé suivant l'une des revendications 16 à 26 précédentes,
**caractérisé en ce qu'**
au moyen du dispositif d'ordinateur, on prend en compte, au moyen d'une triangulation lors de l'étalonnage, un défaut angulaire entre des parties décalées les unes par rapport aux autres des motifs (M1, M2) d'étalonnage (S3).

28. Procédé suivant l'une des revendications 16 à 27 précédentes,
**caractérisé en ce que**
tout le système ou des parties constitutives du système et l'espace, la plage de détection ou la paroi plane ou la surface plane peuvent être déplacés les uns par rapport aux autres.

29. Procédé suivant l'une des revendications 16 à 28 précédentes,
**caractérisé en ce que**
le projecteur de lumière a du matériau de petit coefficient de dilatation thermique, notamment du zerodur, du suprasil, de la silice fondue.

30. Procédé suivant l'une des revendications 16 à 29 précédentes,
**caractérisé en ce que**
le projecteur de lumière est stabilisé optiquement, notamment au moyen d'une cellule d'absorption ou d'un poste de référence.
